## Europäisches Patentamt

## European Patent Office

## Office européen des brevets

(19)

(11) **EP 1 437 842 A1**

(12) **EUROPÄISCHE PATENTANMELDUNG**

(43) Veröffentlichungstag:
**14.07.2004 Patentblatt 2004/29**

(51) Int Cl.[7]: **H04B 7/06**, H04L 27/26

(21) Anmeldenummer: 03000427.9

(22) Anmeldetag: **10.01.2003**

(84) Benannte Vertragsstaaten:
**AT BE BG CH CY CZ DE DK EE ES FI FR GB GR HU IE IT LI LU MC NL PT SE SI SK TR**
Benannte Erstreckungsstaaten:
**AL LT LV MK RO**

(71) Anmelder: **SIEMENS AKTIENGESELLSCHAFT**
**80333 München (DE)**

(72) Erfinder:
- **Costa, Elena, Dr.**
  **85748 Garching (DE)**
- **Haas, Harold, Prof.**
  **28759 Bremen (DE)**
- **Schulz, Egon, Dr.**
  **80993 München (DE)**

(54) **Mehrträgerübertragung mit Sendediversität**

(57) Verfahren zum Übertragen von Daten in einem Kommunikationssystem, insbesondere zum Zuweisen von Ressourcen

Die Erfindung bezeiht sich auf ein Verfahren zum Übertragen von Daten ($a^m(i)$) über zumindest eine Verbindung ($V^{lm}$, $V^{km}$) zwischen einer sendenden Station (BS) und einer empfangenden Station ($MS^m$), bei dem jeder Datenwert ($a^m(i)$) einer Vielzahl von Subressourcen ($\mathbf{f}_x = (f_1, f_2,..., f_k)$; $\mathbf{c}^m(j) = (c_1, c_2,..., c_j,...c_p)$) eines Trägers zugeordnet wird, wobei die Zuordnung orthogonal erfolgt, und die Daten auf den Subträgern zu einem Sendesignal (s(t)) bereitgestellt werden.

Um u.a. eine Verwendung hochgradig korrelierter Subträger ($f_1$, $f_2$ bzw. $f_4$, $f_5$) zu ermöglichen, wird vorgeschlagen, das Sendesignal (s(t)) über eine Vielzahl, zumindest zwei räumlich zueinander beabstandeter Antennen (A1, Ak) auszusenden.

FIG 2

EP 1 437 842 A1

**Beschreibung**

Die Erfindung bezieht sich auf ein Verfahren zum Übertragen von Daten in einem Kommunikationssystem bzw. zum Bereitstellen solcher Daten für die Übertragung mit den Merkmalen des Patentanspruchs 1 sowie eine Vorrichtung zum Durchführen eines solchen Verfahrens.

Aus Funk-Kommunikationssystemen, beispielsweise gemäß UMTS(Universal Mobile Telecommunications System) ist bekannt, über eine Funk-Schnittstelle zwischen einer netzseitigen Station und einer teilnehmerseitigen mobilen Station Daten zu übertragen. Um die verfügbare Ressource, beispielsweise ein verwendeter Code oder Frequenzkanal in einem verfügbaren Frequenzspektrum optimal ausnutzen zu können, sind spezielle Verfahren zum Zuteilen der Ressourcen und Unter-Ressourcen zu Daten, welche zu übertragen sind, bekannt.

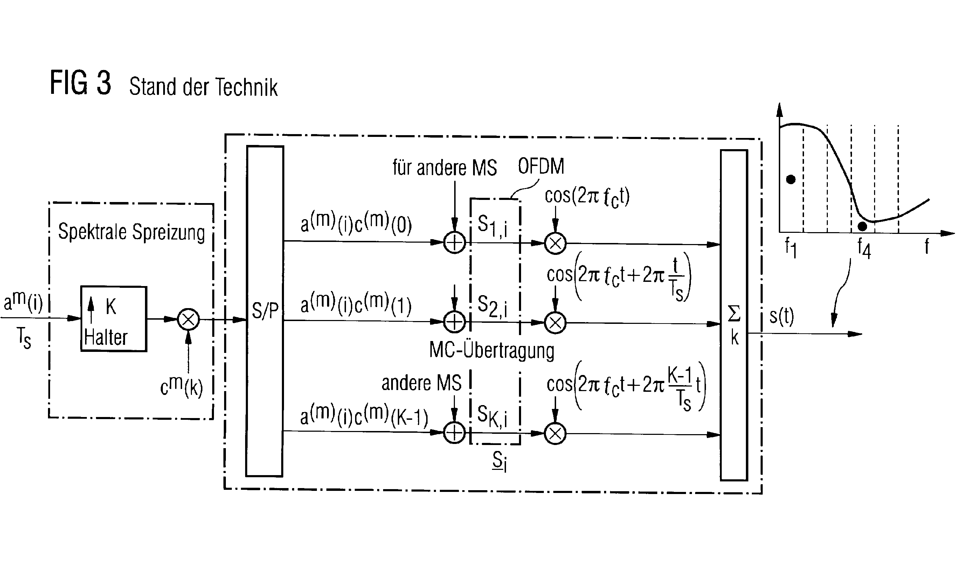

Anhand von Fig. 3 ist ein Beispiel für eine Zuweisung von Ressourcen zu Daten $a^m(i)$ veranschaulicht, die vor einer Übertragung in einem Sende-Datenstrom s(t) codiert und frequenzmoduliert werden. In einer ersten Stufe wird die eintreffende Datenfolge von Daten $a^m(i)$ für eine m-te Teilnehmerstation in einem ersten Schritt spektral gespreizt, dass heißt repliziert, und mit einem Code $c^m(j)$ multipliziert. Die dabei entstehende Folge aus jeweils dem Produkt aus dem zu übertragenen Datenwert und einem Codeelement des Codes wird einem Modul zur Seriell-Parallel-Umsetzung zugeführt. Das erste Produkt $a^m(i)c^m(0)$ wird einem ersten Datenpfad zugeführt, das zweite Produkt $a^m(i)c^m(1)$ einem zweiten Datenpfad und so weiter. In die Produkte auf diesen Datenpfaden werden die entsprechenden Produkte aus anderen Daten für andere teilnehmerseitigen Stationen eingesetzt. Es entsteht dadurch ein paralleler Datenstrom aus Sendesignalen s(1, i), s(2,i),..., worauf eine Frequenzmodulation angewendet wird. Dabei werden die Datenpfade derart frequenzmoduliert, dass sie innerhalb eines verfügbaren Frequenzbandes bzw. entsprechend innerhalb einer verfügbaren Sendezeitdauer $T_s$ gleichmäßig beanstandet sind. Nach einer Summierung über alle Datenpfade entsteht das Sendesignal s(t), welches mit Hilfe einer Antenne über die Funk-Schnittstelle übertragen wird. Ein solches Verfahren ist z.B. das Mehrträger-Codeteilungs-Mehrfachzugriff-System (MC-CDMA: Multi Carrier Code Division Multiple Access). Problematisch ist bei solchen Systemen der Verlust einer Orthogonalität der den Teilnehmern zugewiesenen Codes $c^m(j)$, was typischerweise in Abwärtsverbindungen von der netzseitigen Sendestation zu der teilnehmerseitigen Empfangsstation aufgrund der Frequenzselektivität des Funkkanals auftritt.

Das MC-CDMA-Übertragungsschema besteht aus einer Verkettung von Direktabfolge-Spreizspektrum (DS-SS: Direct-Sequence Spread-Spectrum) -Modulation und einer orthogonalen Mehrträger- (MC: Multi-Carrier) Frequenzdivisions-Multiplex-Übertragung (OFDM: Orthogonal Frequency Division Multiplexing). Ein ursprünglicher Datenstrom $a^m(i)$ mit dem Index i für die zeitliche Abfolge einzelner Datenwerte, dass heißt i = 0,1,2,..., ∞, für eine m-te teilnehmerseitige Station, wird mit Hilfe eines K-Chip-langen Spreizcodes $c^m = (c^m(0), c^m(1),...,c^m(i),..., c^m(K-1))$ gespreizt, wobei jeder Chip einen von K Sub-Trägern als Unter-Ressourcen moduliert, die innerhalb der verfügbaren Bandbreite gleich beabstandet sind. Vom Grundprinzip her kann durch das Verwenden orthogonaler Codes in einer perfekt synchronen Umgebung eine Spreizung der Daten bzw. Informationen von bis zu K teilnehmerseitigen Stationen simultan auf den gleichen Sub-Trägern ohne das Erzeugen einer Mehr-Teilnehmer-Interferenz (MUI: Multi-User Interference) erzielt werden. Der in dem i-ten OFDM-Block übertragene Signalvektor kann dabei geschrieben werden als

$$\mathbf{s}_i = \sum_{m=1}^{K} \mathbf{s}_i^m = (s_{1,i}, s_{2,i}, s_{3,i}, ...., s_{K,i}),\qquad(1)$$

wobei

$$s_i^m = a^m(i)c^m \text{ und } s_{k,i} = \sum_{m=1}^{K} a^m(i)c^m(k-1)$$

gilt.

Dabei werden k der K Subträger in der Bandbreite für ein Symbol genutzt. Bei einer Übertragung von X>1 Symbolen, verteilt auf K Subträger, wird der Subträgerabstand kleiner. Das Produkt X × K ist ein Maß für den garantierten Abstand der Subträger zueinander.

Typischerweise wird eine geringe Modifikation vorgenommen, und zwar durch eine Seriell-zu-Parallel-Umsetzung des ursprünglichen Datenstroms vor der Spektralspreizungs-Modulation, so dass für jede teilnehmerseitige Station simultan X > 1 Symbole durch deren Spreizung auf XxK-Sub-Trägern pro OFDM-Block mit je X Datenwerten bzw. Symbolen übertragen werden. Die daraus resultierenden Subträgerabstände garantieren auf jedem Subträger ein flaches Ausblenden (flat fading), was von großer Bedeutung bei Mehrträgerübertragungen ist. Da das Ausblenden auf benachbarten Subträgern üblicherweise korreliert wird, werden die Subträger zum Erzielen einer hohen Frequenzdiversität den XK-modulierten Chip derart zugeordnet, dass die Frequenztrennung unter den Trägern, die den Chip zugeordnet sind, für das gleiche Datensymbol maximiert wird.

Bei einer solchen Vorgehensweise geht selbst bei einer Übertragung in Abwärtsrichtung, wo eine perfekte Zeitsynchronisierung zwischen einzelnen teilnehmerseitigen Stationen angenommen werden kann, die Othogonalität der den verschiedenen teilnehmerseitigen Stationen zugewiesenen Codes verloren, da die zugewiesenen Subträger bzw. Subressourcen durch verschiedene komplexe Kanalübertragungsfaktoren beeinträchtigt werden. Folglich nimmt die Mehrteilnehmerinterferenz (MUI: Multi User Interference) zu.

Bei einem Schema einer Einzel-Teilnehmererfassung (SUD: Single-User Detection) wird dieses Problem mit Hilfe einer Linearen Kanalgleichrichtung (channel linear equalization) gelöst. Der Null erzwingende (ZF: Zero-Forcing) Equalizer kann die Orthogonalität durch Invertieren der Kanalübertragungsfunktion perfekt zurückgewinnen und daher die Mehrteilnehmerinterferenz vollständig eliminieren, dies jedoch mit dem Preis einer hohen Rauschsteigerung auf ausgeblendeten (faded) Subträgern. Andererseits dient der häufiger verwendete Equalizer für eine Anwendung des sogenannten Minimum Mean Square Error (MMSE) Verfahrens zum Maximiren des Signal-zu-Interferenz-plus-Rausch-Verhältnisses. Seine Leistungsfähigkeit leidet jedoch an einer verbleibenden Nicht-Orthogonalität. Dies würde Entwickler motivieren, die komplexere Mehrteilnehmer-Erfassung (MUD: Multi User Detection)zu verwenden, und zwar durch eine Interferenzauslöschung (IC: Interference Cancellation) oder gemeinsame Auswertung (JD: Joint Detection) empfangener Datenblöcke, was jedoch bei einer mobilen Empfängerstation in der Praxis nicht durchführbar erscheint.

Die Aufgabe der Erfindung besteht darin, ein derartiges Verfahren zu vereinfachen und dabei zugleich zu verbessern. Ferner soll eine Vorrichtung zum Durchführen eines solchen Verfahrens vorgeschlagen werden.

Diese Aufgabe wird durch ein Verfahren zum Übertragen von Daten mit den oberbegrifflichen Merkmalen des Patentanspruchs 1 bzw. eine Vorrichtung zum Durchführen eines solchen Verfahrens mit den Merkmalen des Patentanspruchs 11 gelöst.

Besonders vorteilhaft ist die Übertragung eines Datenstroms gleichzeitig über eine Vielzahl räumlich beanstandeter Antennen, da für den Fall schlechter Übertragungsbedingungen an einem Übertragungs- bzw. Sendeort gute Aussichten bestehen, dass an einem weniger weit entfernten anderen Ort eine deutlich fehlerfreiere Übertragung möglich ist. Die Übertragung der Daten zwischen einer sendenden Station und einer empfangenden Station erfolgt dadurch über eine Vielzahl von Sendewegen, die sich zwischen den einzelnen Antennen und der empfangenden Station ausbilden. In üblicher Art und Weise wird zwar jeder Datenwert einer Vielzahl von Subressourcen eines Trägers zugeordnet, wobei die Zuordnung orthogonal erfolgt und die Daten auf den Subressourcen zu einem Sendesignal zusammengesetzt werden. Nunmehr wird aber auch berücksichtigt, dass die Verbindung zwischen einer Antenne an einem ersten Sendeort und der empfängerseitigen Station möglicherweise aufgrund von örtlichen Störungen oder elektromagnetischen Störeinflüssen und dergleichen schlechter ist, als die Verbindung über einen anderen Datenpfad von einer Antenne aus, die räumlich beabstandet zu der ersten Antenne angeordnet ist.

Für eine von den Antennen weiter entfernte teilnehmerseitige Station ist es dabei vorteilhafter, wenn die einzelnen der Antennen einen größeren räumlichen Abstand haben, während für eine teilnehmerseitige Station in der unmittelbareben Nähe der Antennen auch ein geringerer räumlicher Abstand bereits vorteilhafte Auswirkungen haben kann. Die Beabstandung kann somit auch mit Blick auf die Umgebungsbedingungen und die Netzanforderungen an den jeweiligen Aufstellungsort der sendenden Antennen angepasst werden.

Unter sendenden Antennen werden hierbei insbesondere Antennen verstanden, die zum Anwenden des Verfahrens verwendet werden und in der Lage sind, als Antennengruppe gemeinsam ein und dasselbe Signal auszusenden. Natürlich werden diese sendenden Antennen in den meisten Fällen zugleich auch als Empfangsantennen verwendet, wobei die vorgeschaltete Sendeeinrichtung entsprechend als Sende- und Empfangseinrichtung bzw. Tranceiver ausgebildet wird.

Besonders vorteilhaft und von eigenständiger und erfinderischer Ausgestaltung ist ein Verfahren, bei dem aufeinanderfolgende Datenelemente oder Symbole bzw. Symbolelemente, welche von einer Datenquelle empfangen und über das System zu übertragen sind, in einem seriell-parallel-Splitter auf eine Vielzahl paralleler Datenpfade verteilt werden. Ein erstes Element wird dabei auf einen ersten Datenpfad gesetzt, das zweite Element auf einen zweiten Datenpfad usw. Die Daten bzw. Datenelemente auf den einzelnen Datenpfaden werden dann codiert und einer Frequenzmodulation unterzogen, wie dies für sich genommen bekannt ist. Dazu gehört insbesondere ein Vervielfachen eines jeden Datenwertes und Verteilen auf wiederum eine Vielzahl weiterer Datenpfade, auf denen dann eine Codierung, eine Einmischung von Werten anderer teilnehmerseitiger Stationen und eine Frequenzmodulation vor einer Summierung durchgeführt wird.

Entsprechend ist eine Vorrichtung zum Umsetzen eines solchen Verfahrens mit den Merkmalen des Patentanspruchs 12 besonders vorteilhaft.

Vorteilhafte Ausgestaltungen sind Gegenstand von abhängigen Ansprüchen.

Als Subressource zum Übertragen der Datenwerte bzw. Datensymbole werden vorteilhafterweise einzelne Frequenzen oder Unter-Frequenzbänder eines größeren Frequenzbandes verwendet. Möglich ist natürlich auch der Einsatz von einander beabstandeten Frequenzen, wobei dazwischen liegende Frequenzen für andere Einrichtungen verwendet werden. Durch die räumliche Beabstandung der Vielzahl von Antennen bietet sich aber gerade der Vorteil, dass auch direkt zueinander benachbarte Frequenzen für die Übertragung der Daten bzw. Datenwerte verwendbar sind. Selbes gilt letztendlich auch für die Verwendung von verschiedenen othogonalen Codeelementen eines Codes als Subressource für die Übertragung der Daten bzw. Datenwerte.

Vorzugsweise wird eine Abfolge empfangener Symbole, Daten oder Datenelemente auf verschiedene zueinander parallele Datenpfade verteilt und getrennt voneinander bearbeitet. Gemäße einer allgemeinen und weniger bevorzugten Möglichkeit wird jeder einzelne dieser Datenpfade einer der Vielzahl von Antennen zugeführt, so dass über die räumlich beabstandeten Antennen jeweils verschieden modulierte und verschieden codierte Signale übertragen werden. Jedoch wird die Lösung besonders bevorzugt, bei welcher die Daten auf den einzelnen Pfaden selber nochmals auf eine weitere Vielzahl von weiteren Datenpfaden aufgesplittet, codecodiert und mit jeweils einer Vielzahl von Trägerfrequenzen moduliert werden. Durch eine anschließende Summierung über die Frequenzen ist es möglich, über jedes der Antennenelemente den Datenwert codiert und mit einer Vielzahl von Frequenzen zu übertragen. Dies erhöht die Diversität und damit die Wahrscheinlichkeit einer guten Demodulierbarkeit und Rekonstruierbarkeit des Datenwertes beim Empfänger. Auf diese Art und Weise entsteht doppelte Absicherung gegen Fehlübertragungen, wie sie für sich genommen als Orthogonal Frequency Division Multiplex (OFDM) bekannt ist.

Durch die räumlich beabstandete Übertragung mit Hilfe der verschiedenen Antennen ist auch besonders unkritisch, wenn jeweils direkt benachbarte Frequenzen als Subressource verwendet werden, da für den Fall einer Ausblendung eines ganzen Frequenzbereiches im Sendebereich einer Antenne die Übertragung des gesamten Frequenzbereiches noch von den anderen Antennen erfolgt und somit die Wahrscheinlichkeit sehr hoch ist, dass beim Empfänger trotzdem sämtliche Daten empfangen werden.

Abgesehen von der für sich bekannten Möglichkeit der Aufsummierung über die einzelnen Datenpfade, welche mit verschiedenen Frequenzen moduliert wurden, kann natürlich in besonders vorteilhafter Ausführungsform zusätzlich auch eine weitere Aufsummierung über die einzelnen Datenpfade der verschiednen Codeelemente des Codes vorgenommen werden, so dass ein Gesamtsendesignal entsteht, welches als solches zu sämtlichen der Antennen geführt wird.

Bei einer solchen Anordnung von Antennen mit einer räumlichen Beabstandung und jeweils dem selben Sendesignal können die Subträger hochgradig korreliert verwendet werden. Dies würde üblichen Ansätzen bei z.B OFDM prinzipiell widersprechen, da bei hochgradig korrelierten Subträgern Diversität verloren geht.

Folglich ist es möglich, einfache Empfängerstrukturen bei den mobilen empfängerseitigen Stationen zu verwenden. Um den Verlust der Frequenzdiversität zu kompensieren, wird eine räumliche Diversität durch die Anordnung einer Gruppe von sendenden Antennen verwendet.

Eine Anwendung des Verfahrens ist dabei besonders für Übertragungen in Abwärtsrichtung vorteilhaft, dass heißt für Übertragungen von einer netzseitigen sendenden Station zu einer entfernten stationären oder mobilen teilnehmerseitigen Station. Möglich ist die Anwendung des Verfahrens prinzipiell aber auch in Aufwärtsrichtung, dass heißt von einer oder mehreren teilnehmerseitigen Stationen zu einer netzseitigen Empfangsstation hin. In letzterem Fall werden zweckmäßigerweise einer einzelnen sendenden teilnehmerseitigen Station mehrere Antennen zugeordnet. Denkbar ist aber auch der Einsatz mehrerer untereinander gekoppelter oder zumindest koordiniert übertragender sendender teilnehmerseitiger Stationen.

Ein Ausführungsbeispiel mit verschiedenen Ausführungsformen wird nachfolgend anhand der Zeichnung näher erläutert. Es zeigen:

Fig. 1A            eine Anordnung zum Umsetzen des Verfahrens zur Übertragung von Daten über eine Vielzahl parallel geschalteter Antennen;

Fig. 1B, Fig. 1C    Detailansichten verschiedener Ausführungsformen bzw. Entwicklungsstufen einer solchen Anordnung;

Fig. 2             eine bevorzugte Anordnung zum Multiplexen, Codieren sowie Modulieren von Daten für die anschließende Übertragung über eine Gruppe parallel zueinander geschalteter Antennen und

Fig. 3             eine einfache Anordnung zum Vorverarbeiten von Daten für eine spätere Übertragung über ein einzelnes Antennenelement gemäß dem Stand der Technik.

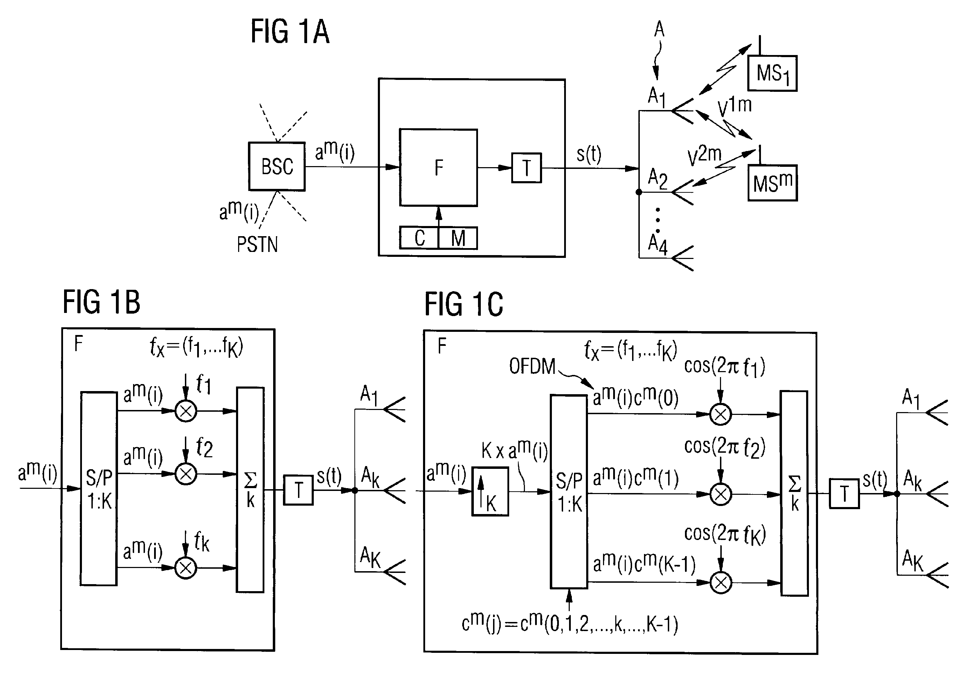

Wie dies aus Fig. 1 ersichtlich ist, besteht eine Anordnung zum Übertragen von Daten in einem funkgestützten Kommunikationssystem aus einer Vielzahl verschiedenartigster Einrichtungen, von denen hier nur einzelne für das Verfahren relevantere Einrichtungen dargestellt sind.

Bei dem dargestellten Ausführungsbeispiel wird angenommen, dass eine Folge von Datenwerten $a^m(i)$, welche zu einer m-ten teilnehmerseitigen Station $MS^m$ zu Übertragen sind, aus einem Festnetz PSTN zu dem Funk-Kommunikationssystem übertragen werden. Diese Daten können natürlich auch von anderen Datenquellen, beispielsweise über das Internet oder aus einem Speicher des Kommunikationssystems stammen. Von dem Festnetz PSTN aus werden die Daten $a^m(i)$ zu einer Ressourcen verwaltenden Einrichtung übertragen, die bei dem dargestellten Ausführungsbeispiel als Basisstations-Steuereinrichtung BSC dargestellt ist. Diese Basisstations-Steuereinrichtung BSC weist vorteilhafterweise auch Verbindungen zu anderen Kommunikationssystemen, unter anderem auch zu Paketnetzen für die Anbindung eines Intranet oder des Internet auf.

Außerdem ist die Basisstations-Steuereinrichtung BSC je nach Kommunikationssystem mit weiteren steuernden und überwachenden Einrichtungen und Instanzen des Kommunikationssystems verbunden, beispielsweise mit einem Betriebs- und Wartungszentrum, einem Heimatregister, einem Besucherregister und dergleichen. Von der Basisstations-Steuereinrichtung BSC wird die Folge von Datenwerten $a^m(i)$ einer Sende- und/oder Empfangseinrichtung BS zugeführt, die üblicherweise auch als Basis-Tranceiverstation bezeichnet wird.

Die Sende- und/oder Empfangseinrichtung BS, von der nachfolgend zur Vereinfachung nur die senderseitige Funktionalität betrachtet werden soll, weist eine Steuereinrichtung C zum Verarbeiten der zu versendenden Datenwerte $a^m(i)$ und zum Betreiben der Einrichtung als solches sowie einen Speicher M auf, in dem Algorithmen und Daten für den Betrieb der Einrichtung aber auch Codes und dergleichen für eine Codierung von Datenwerten bzw. eine Decodierung von Datenwerten abgespeichert werden. Die Datenverarbeitung findet zweckmäßigerweise direkt in dem Bauelement der Steuereinrichtung C statt, wird in Fig. 1 zur besseren Veranschaulichung jedoch in einem eigenen Block F skizziert. Die zum Versenden aufbereiteten, dass heißt codierten und/oder frequenzmodulierten Datenwerte $a^m(i)$ werden als zu versendende Datenfolge s(t) über eine Sendeeinrichtung T einer Gruppe von Antennen A1 - A4 zugeführt. Von den Antennen A1 - A4 aus findet eine Übertragung über eine Funkschnittstelle $V^{km}$, $V^{lm}$ zu einer oder mehreren teilnehmerseitigen Stationen $MS^1$, $MS^m$ statt, welche stationär oder mobil betreibbar sind. Bei derzeitigen Kommunikationssystemen sind derartige teilnehmerseitige Stationen $MS^1$, $MS^m$ Mobilfunkgeräte oder mobile Terminals für eine Kommunikation über ein Funk-Telekommunikationsnetz bzw. ein Funk-Datennetz.

Wie dies bereits Fig. 1A entnehmbar ist, wird eine Folge von zu übertragenden Datensymbolen bzw. Datenwerten $a^m(i)$ einer Gruppe von Antennen A1 - A4 zugeführt, wobei diese Gruppe von Antennen parallel geschaltet ist und somit das gleiche zu versendende Gesamtsignal s(t) aussendet.

Wie dies aus Fig. 1B ersichtlich ist, werden eintreffende Datenwerte $a^m(i)$ mittels eines Splitters S/P bzw. einer Seriell-zu-Parallel-Umsetzungseinrichtung auf eine Vielzahl von Datenpfaden gesetzt, wobei die Datenwerte $a^m(i)$ repliziert werden, so dass auf jedem der Datenpfade der Datenwert $a^m(i)$ übertragen wird.

Auf jedem der Datenpfade findet eine Frequenzmodulation statt, wobei der jeweilige Datenwert $a^m(i)$ auf eine Frequenz $f_x$ = (f1, f2,... fk) aufmoduliert wird. Nachfolgend werden die modulierten Datenwerte der einzelnen Pfade in einem Addierer $\Sigma$ aufaddiert, wobei das resultierende Gesamtsignal s(t) über die Sendeeinrichtung T der Vielzahl von Antennen A1, A2,..., A4 zugeführt wird. Die einzelnen Frequenzen werden üblicherweise als Imaginärteil oder Cosinus des Exponenten $2\pi f_x$ mit $f_x$ = t/T dargestellt.

Gemäß einer bevorzugteren Ausführungsform findet zusätzlich eine Codierung statt, wie dies aus Fig. 1C ersichtlich ist. Einleitend werden die zu Übertragenden Werte $a^m(i)$ vor, bei oder nach der Umsetzung auf die Vielzahl von Datenpfaden mit einem Code $\mathbf{c}^m(j)$= ($c_0$, $c_1$,... $c_{K-1}$) codiert. Dabei wird dem jeweils auf die verschiedenen Datenpfade replizierten und zu übertragenden Datenwert $a^m(i)$ pro Datenpfad jeweils ein anderes Codeelement $c_0$, ..., $c_{k-1}$ zugeordnet und mit diesem multipliziert. Zweckmäßigerweise hat der Code $\mathbf{c}^m(j)$ entsprechend gleich oder mehr Codeelemente wie Datenpfade zur Datenwertverarbeitung verwendet werden. Bei der dargestellten Ausführungsform hat der Code $\mathbf{c}^m(j)$, der beispielsweise aus dem Speicher M abrufbar und/oder mittels der Steuereinrichtung C erzeugbar ist, P einzelne Codeelemente $c_0$,... $c_{k-1}$.

Entsprechend erfolgt vorteilhafterweise auch eine Zuordnung zu insgesamt K einzelnen Frequenzen, so dass die Anzahl K der für die Modulation verwendeten Frequenzen gleich der Anzahl K der Codeelemente ist. Nach der anschließenden Aufsummierung und weiteren Verarbeitung in der Sendeeinrichtung T, beispielsweise einer Verstärkung oder Filterung, wird das resultierende Signal s(t) der Gruppe aus Antennen A1,... zugeführt und über diese ausgesendet.

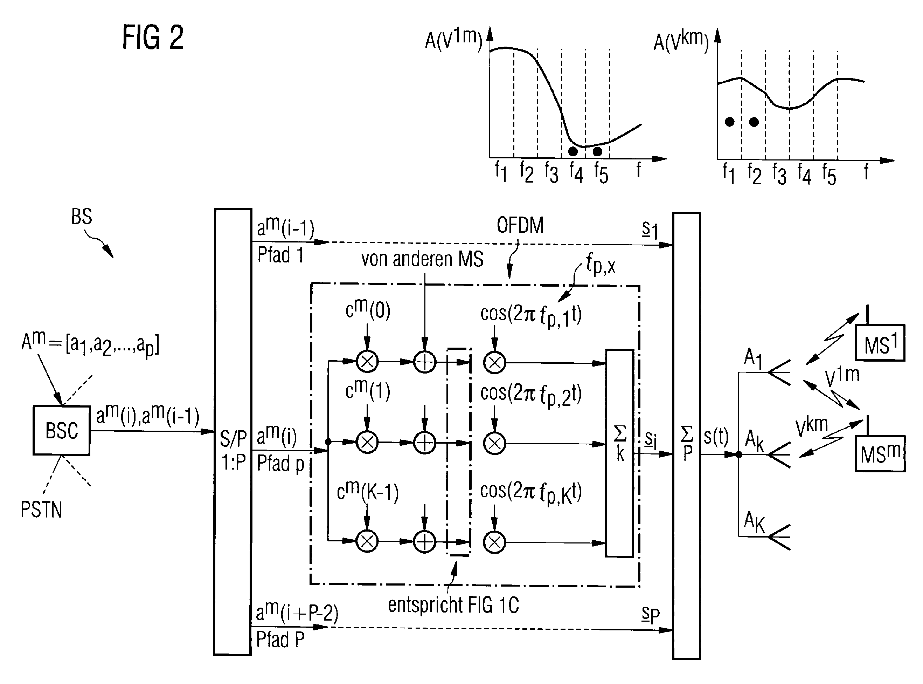

Nachdem anhand der Fig. 1A - 1C die einzelnen Elemente für die bevorzugte Verfahrensweise dargestellt sind, wird anhand Fig. 2 eine besonders bevorzugte Ausführungsform veranschaulicht. Dabei werden einzelne Einrichtungen und funktionelle Elemente, welche bereits anhand der vorstehend beschriebenen Figuren veranschaulicht sind, zur Vereinfachung nicht wiederholt aufgeführt.

Wiederum wird davon ausgegangen, dass eine Abfolge einzelner Datenwerte $a^m(i)$ über eine Gruppe zueinander parallel geschalteter und räumlich zu einander beabstandeter Antennen A1, A2... und entsprechend ausgebildete Funkschnittstellen $V^{lm}$, $V^{km}$,..., zu einer teilnehmerseitigen, empfangenden Station $MS^m$ übertragen wird. Andere im Funkbereich befindliche teilnehmerseitige, empfangende Stationen MS[1] empfangen dieses Signal zwar auch, wissen aber aufgrund entsprechender Zuordnungen, dass dieses Signal nicht für sie bestimmt ist, womit eine weitere Verarbeitung unterdrückt wird.

Bei diesem Beispiel setzt sich die Abfolge einzelner Datenwerte $A^m(i-1)$, $A^m(i)$ ... aus Symbolen, Daten oder Elementen davon zusammen, welche von einer Datenquelle stammen. Die Datenquelle sendet dabei eine Folge von Datenblöcken oder Symbolen $A^m = [a_1, a_2, ..., a_p]$ zur Übertragung über die Schnittstelle aus. Die einzelnen Elemente $a_1, a_2, ...$ der einzelnen Symbole entsprechen dabei der zu übertragenden Datenfolge der $a^m(i)$ gemäß beispielsweise Fig. 1C. Diese Datenfolge wird bei dem bevorzugten Ausführungsbeispiel der Fig. 2 einer seriellparallel-Umsetzeinrichtung S/P zugeführt und auf P Datenpfade verteilt. Ein erster eintreffender Datenwert $a^m(i-1)$ wird dem ersten Pfad 1 zugeleitet, ein daraufhin folgender eintreffender Datenwert $a^m(i)$ wird einem zweiten Datenpfad p zugeführt usw. In bevorzugter Ausführungsform entspricht dabei die Anzahl der Datenpfade P der Anzahl von einzelnen Elementen des ursprünglichen Symbols $A^m$, so dass die einzelnen Symbolelemente über verschiedene Pfade verteilt werden. Nach einer Bearbeitung der Datenwerte auf den einzelnen Pfaden werden die auf den Pfaden entstehenden Signale $s_1$, $s_i$, ..., $s_p$ einem Mischer, insbesondere Addierer $\Sigma$, zugeführt. Das darin erzeugte, aufsummierte Signal s(t) entspricht dem Sendesignal, welches der Gruppe von Antennen $A_1$, ... $A_k$, ... $A_K$ zugeführt wird.

Bei der bevorzugten dargestellten Ausführungsform werden die Datenwerte $a^m(i)$ auf den einzelnen Pfaden jeweils codecodiert, mit Daten anderer Datenquellen gemischt und letztendlich frequenzmoduliert, wie dies anhand von Fig. 1C beschrieben wurde und für sich genommen auch aus dem Stand der Technik aus dem OFDM gemäß Fig. 3 bekannt ist.

Das auf parallelen untergeordneten Datenpfaden entstehende OFDM-Symbol wird dabei in für sich bekannter Art und Weise frequenzmoduliert, wobei vorteilhafterweise eine Anzahl von x = 1,2, ...,K verschiedenen Frequenzen $f_{p,x}$ verwendet wird, welche vorteilhafterweise hochgradig korreliert sein sollten.

Bei einer entsprechenden Vorgehensweise auf den untergeordneten Datenpfaden für die codierten Datenwerte werden vorteilhafterweise andere zueinander benachbarte Frequenzen als Subressource verwendet. Die Frequenzen als Subressource für die verschiedenen übergeordneten Datenpfade stammen vorteilhafterweise aus verschiedenen Frequenzbändern als übergeordneter Ressource.

Nach der für sich üblichen Aufsummierung der untergeordneten Datenpfade mit den frequenzmodulierten und codierten Datenwerten findet eine weitere Aufsummierung der einzelnen ursprünglich aufgeteilten und übergeordneten Datenpfade mit jeweils über die frequenzmodulierten Unterdatenpfade aufsummierten Signalen $s_1$, $s_2$, ... sp statt. Letztendlich entsteht somit eine Vielzahl von K · P Subträgern, die in dem resultierenden Signal s(t) eingearbeitet sind. Dieses Signal s(t) wird, bei Bedarf in einer Sendeeinrichtung T weiterverarbeitet, zu der Gruppe von Antennen A1, A2,... geleitet und über diese und die Funkschnittstelle $V^{lm}$, ... $V^{km}$ gesendet.

Die durch die derartige Datenaufbereitung und Verwendung einer Gruppe von zueinander parallel geschalteten Antennen A1, A2,... mögliche hochgradige Korrelierung der Zuweisung von Subressourcen zu im vorliegenden Fall zueinander benachbarten Frequenzen innerhalb eines Trägerfrequenzbandes ist aus den Frequenz-Amplitudendiagrammen im Vergleich mit dem aus Fig. 3 ersichtlich. Bei OFDM-Codierungen gemäß dem Stand der Technik müssen stets deutlich voneinander beabstandete Frequenzen $f_1$, $f_4$ für die benachbarten Subträger verwendet werden, um sicherzustellen, dass bei einer Störung oder dergleichen und entsprechend nur geringer Sendeleistung auf einer Frequenz $f_4$ eine entsprechend bessere Sendeleistung auf einer anderen dazu entfernten Frequenz $f_1$ möglich ist. Dahingegen können gemäß dem vorstehend beschriebenen Verfahren direkt benachbarte Frequenzen $f_1$, $f_2$ bzw. $f_4$, $f_5$ für die einzelnen Subträger verwendet werden.

Für den Fall, dass die effektive Sendeleistung oder Sendequalität des resultierenden Signals s(t) beim Aussenden über die erste Antenne relativ schlecht ist, empfängt die m-te empfangende Station $MS^m$ ein entsprechend nur schlechtes und möglicherweise nicht ausreichend verarbeitbares Signal von der ersten Antenne A1, wobei im ungünstigen Fall keiner der Subträger $f_1$, $f_2$ auf dieser Verbindung $V^{lm}$ verwendbar ist. Durch die räumliche Beabstandung der anderen Antenne $A^k$ empfängt die m-te teilnehmerseitige Station $MS^m$ über die Funkschnittstelle $V^m$ jedoch über deren Subträger $f_4$, $f_5$ ein deutlich besseres Signal, da möglicherweise bei der ersten Antenne A1 störende Umgebungsbedingungen am Standort der räumlich beabstandeten zweiten Antenne A2 nicht vorliegen.

Neben Störungen direkt am Standort der einzelnen Antennen A1, A2, ... sind weitere Störeinflüsse auf den Verbindungsstrecken zwischen den einzelnen Antennen A1, A2,... zu der empfangenden teilnehmerseitigen Station $MS^m$ denkbar. Anstelle einer aufwendigen Zuordnung der zu übertragenden Datenwerte auf eine Vielzahl deutlich voneinander beabstandeter Subträgern im Frequenzbereich $f_1$, $f_4$ kann somit eine durch die Verwendung direkt benachbarter oder eng bei einander liegender Subträger $f_1$, $f_2$ bzw. $f_4$, $f_5$ begrenzte Diversität, hier z.B. Frequenz-Diversität, durch die gewonnene räumliche Diversität ausgeglichen werden.

Besonders vorteilhaft ist das vorstehend beschriebene Verfahren durch die Zuordnung der verschieden codierten Datenwerte auf den verschiedenen parallelen Datenpfaden zu jeweils verschiedenen Gruppen von Subträgern, so dass für den Fall einer allgemeinen Störung eines bestimmten Frequenzbereiches zwar ein mit einem bestimmten Codeelement **c**$^m$(j) codierter Datenwert $a^m(i)$ zwar trotz der eingeführten räumlichen Diversität nicht fehlerfrei empfangen werden kann, jedoch die weiteren mit den anderen Codeelementen codierten Datenwerte zumindest zu einem ausreichenden Teil aufgrund der anderen verwendeten Trägerfrequenzen ausreichend demodulierbar und decodierbar sind.

Im Vergleich zu den für sich bekannten OFDM-Verfahren wird somit eine zusätzliche Stufe in den Übertragungsschema eingeführt, welche eine räumliche Diversität durch simultanes Übertragen des resultierenden Signals s(t) über eine Anordnung vorzugsweise unkorrelierter Antennen A1,... eingeführt wird. Die zusätzliche räumliche Diversität ermöglicht, die Anforderung an die Frequenzdiversität zu lockern, so dass Codeelemente $c^m(j)$ bzw. Chip davon, die mit dem gleichen Datensymbol bzw. Datenwert $a^m(i)$ moduliert werden, auf sogar hochgradig korrelierten Subträgern übertragen werden können. Dabei können bewusst hochgradig korrelierte Subträger ausgewählt werden, um ein Datensymbol zu übertragen, was im Gegensatz zu der Subträgerbelegung steht, welche bei konventionellen MC-CDMA-Systemen verwendet werden.

Vorausgesetzt die Spreizcodelänge K des Codes $c^m(j)$ ist nicht größer als die Anzahl korrelierter Subträger, wobei die Kanalkohärenz-Bandbreite typischerweise 5-10-fach höher als die Frequenztrennung zwischen Subträgern ist, dann werden die einzelnen Chip des Codes durch Kanalübertragungsfaktoren mit der gleichen Phase und sehr ähnlicher Amplitude beeinflusst. Dies reduziert den Verlust der Orthogonalität aufgrund der Frequenzselektivität des Funkkanals in hohem Maße, wird aber durch die gewonnene räumliche Diversität überraschend gut ausgeglichen. Anzumerken ist, dass im Fall von P Datensymbolen pro teilnehmerseitiger empfangender Station, die pro OFDM-Block übertragen werden, das resultierende zu übertragende Signal s(t) mittels einer Fourier-Transformation insbesondere der schnellen Fourier-Transformation des Vektors $s = [s_1, s_2,..., s_p,..., s_p]^T$ erzielt wird, wobei der p-te Signalvektor sp entsprechend der vorstehenden Gleichung (1) definiert wird.

Folglich kann ein durch jede Antenne bei den empfangenden teilnehmerseitigen Stationen $MS^1$, $MS^m$,... empfangenes resultierendes Sendesignal s(t) mit Hilfe einer einfachen Maximalverhältniskombinierung (MCR: Maximum Ratio Combiner) demoduliert werden, was einen empfängerseitig nur geringen verarbeitungstechnischen und baulichen Aufwand erforderlich macht.

Bei Betrachtungen der realistischen Umsetzungsbedingungen ist damit zu rechnen, dass die Spreizcodelänge geringer als das Verhältnis zwischen der Kanalkohärenz-Bandbreite und der Beabstandung der Subträger ist. Tatsächlich ist rechnerisch demonstrierbar, dass eine Spreizcodelänge K > 8 die Empfängerkomplexität ohne das Gewinnen einer signifikanten Verstärkung bei der MC-CDMA-Systemleistung erhöhen würde.

Zusammengefasst besteht das grundlegende Konzept darin, hochgradig korrelierte Subträger in einem MC-MS-System (MC: Multi-Carrier, SS: Spreading Spectrum) zu wählen, um verschiedene Chip zu übertragen, die durch die Modulation von Codeelementen mit dem gleichen Datensymbol erzeugt wurden. Durch diese Vorgehensweise wird zwar die Frequenzdiversität stark verschlechtert und das gesamte System ähnelt einem reinen OFDM-System. Jedoch führt die Auswahl der korrelierten Subträger zu einem deutlichen Vorteil bei Mehrteilnehmer-Anwendungen, dass heißt insbesondere MC-CDMA-Verfahren, da die Teilnehmercode-Orthogonalität selbst in einem frequenzselektiven Kanal zumeist gesichert werden kann, wenn eine räumliche Diversität eingeführt wird.

Folglich können einfache Empfängerstrukturen hinsichtlich Hard- und Software bei insbesondere Mobilfunkgeräten als empfängerseitige Stationen verwendet werden. Darüber hinaus bietet die Verfahrensweise Vorteile für CDMA-basierte Systeme mit Blick auf die Einsatzflexibilität, da jedem Teilnehmer bzw. jeder teilnehmerseitigen Station einer oder mehrere Codes zugewiesen werden können, was letztendlich nur noch von den momentanen Verkehrsbedingungen abhängig wäre.

Ein Einsatz ist zwar in einer Vielzahl verschiedenartigster Kommunikationssysteme zweckmäßig, besonders bevorzugt wird aber der Einsatz der Verfahrensweise in Verbindung mit der MC-CDMA-Mehrfachzugriffs-Technologie, die als eine der vielversprechendsten Technologien zum Transport über hoch datenratige Übertragungsverbindungen mit großer Kapazität in zukünftigen funkgestützten Systemen der 4-ten Generation angesehen wird. In diesem Fall findet die Verfahrensweise Einsatz als Subträger-Belegungsschema bei MC-CDMA unter Beibehaltung einer Teilnehmer-Code-Orthogonalität für einfache Empfängerstrukturen in Abwärtsverbindungen.

**Patentansprüche**

1. Verfahren zum Übertragen von Daten ($a^m(i)$) über zumindest eine Verbindung ($V^{lm}$, $V^{km}$) zwischen einer sendenden Station (BS) und einer empfangenden Station ($MS^m$), bei dem

   - jeder Datenwert ($a^m(i)$ einer Vielzahl von jeweils orthogonalen Subressourcen ($f_x = (f_1, f_2,..., f_k)$; $c^m(j) = (c_1, c_2,..., c_j,...c_p)$)) eines Trägers zugeordnet wird und
   - die Daten abschließend als Sendesignal (s(t)) bereitgestellt werden,

   dadurch **gekennzeicnet,** dass

- das Sendesignal (s(t)) über eine Vielzahl, zumindest zwei räumlich zueinander beabstandete Antennen (A1, ..., Ak,...) ausgesendet wird.

2. Verfahren nach Anspruch 1, bei dem
als eine Subressource orthogonale Codeelemente ($c_1$, $c_2$,...) eines Codes ($c^m(j)$) verwendet werden.

3. Verfahren nach Anspruch 1 oder 2, bei dem
als eine andere Subressource Frequenzen ($f_x$) eines Frequenzbandes verwendet werden.

4. Verfahren nach einem vorstehenden Anspruch, bei dem
die räumlich zueinander beabstandeten Antennen (A1, Ak) jeweils parallel geschaltet mit dem gleichen Sendesignal (s(t)) angesteuert werden.

5. Verfahren, insbesondere nach einem vorstehenden Anspruch, zum Übertragen von Daten ($a^m(i)$) über zumindest eine Verbindung ($V^{lm}$, $V^{km}$) zwischen einer sendenden Station (BS) und einer empfangenden Station ($MS^m$), bei dem

- jeder Datenwert ($a^m(i)$) einer Vielzahl von jeweils orthogonalen Subressourcen ($f_x = (f_1, f_2,..., f_k)$; $\mathbf{c}^m(j) = (c_1, c_2,..., c_j,...c_p)$) eines Trägers zugeordnet wird und
- die Daten abschließend als Sendesignal (s(t)) bereitgestellt werden,

dadurch gekennzeicnet, dass aufeinanderfolgende Datenwerte ($a^m(i+p)$) oder Datenwertelemente auf verschiedene Datenpfade (Pfad 1,...,Pfad P) verteilt werden.

6. Verfahren nach einem vorstehenden Anspruch, bei dem
die verschiedenen Datenpfade jeweils mit zumindest einer eigenen Trägerfrequenz ($f_{p,1}$, $f_{p,2}$,...) oder einem eigenen Träferfrequenzbereich moduliert werden.

7. Verfahren nach einem vorstehenden Anspruch, bei dem
jeder Datenwert ($a^m(i)$) und die verschiedenen Datenpfade auf eine weitere Vielzahl von Datenpfaden aufgesplittet und nach einer Codierung ($c^m(j)$) mit jeweils einer eigenen Frequenz ($f_{p2,1}$, $f_{p2,2}$,...) moduliert werden.

8. Verfahren nach einem vorstehenden Anspruch, bei dem
als Subressource jeweils direkt oder eng benachbarte Frequenzen ($f_1$, $f_2$ bzw. $f_4$, $f_5$) eines Trägerfrequenzbereichs als Ressource verwendet werden.

9. Verfahren nach einem vorstehenden Anspruch, bei dem
die Subressourcen ($f_1$, $f_2$ bzw. $f_4$, $f_5$) jeweils zueinander hochgradig korreliert verwendet werden.

10. Verfahren nach einem vorstehenden Anspruch, bei dem empfängerseitig das Empfangssignal mittels einer Maximal-Verhältnis-Kombination (MRC: Maximum Ratio Combiner) demoduliert wird.

11. Sendeeinrichtung zum Durchführen eines Verfahrens nach einem der vorstehenden Ansprüche mit

- einem Dateneingang für eine Folge von Datenwerten ($a^m(i)$), welche zu einer teilnehmerseitigen empfangenden Station ($MS^m$) zu übertragen sind,
- einer Splittereinrichtung (S/D) zum Replizieren der Datenwerte auf eine Vielzahl von Datenpfaden,
- einer Codierungs- und Modulierungseinrichtung zum Codieren der Datenwerte auf den verschiedenen Datenpfaden mit zumindest einem orthogonalen Code ($c^m(k)$) und verschiedenen Subressourcen ($f_1$, $f_4$) eines Trägermediums und
- einem Ausgang für ein resultierendes Sendesignal (s(t)),

gekennzeicnet durch

- eine Gruppe aus räumlich beabstandeten Antennen (A1, Ak,...) mit zueinander parallel mit dem Ausgang für das Sendesignal (s(t)) verbundenen Leitungen.

12. Sendeeinrichtung, insbesondere nach Anspruch 11, zum Durchführen eines Verfahrens nach einem der vorstehenden Ansprüche mit

- einem Dateneingang für eine Folge von Datenwerten ($a^m(i)$), welche zu einer teilnehmerseitigen empfangenden Station ($MS^m$) zu übertragen sind,
- einer Splittereinrichtung (S/D) zum Replizieren der Datenwerte auf eine Vielzahl von Datenpfaden,
- einer Codierungs- und Modulierungseinrichtung zum Codieren der Datenwerte auf den verschiedenen Datenpfaden mit zumindest einem orthogonalen Code ($c^m(k)$) und verschiedenen Subressourcen ($f_1$, $f_4$) eines Trägermediums und
- einem Ausgang für ein resultierendes Sendesignal ($s(t)$),

    **gekennzeicnet** durch

- eine weitere vorgeschaltete einer Splittereinrichtung zum Verteilen aufeinanderfolgender Datenwerte ($a^m(i+p)$) oder Datenwertelemente auf verschiedene übergeordnete Datenpfade (Pfad 1,...,Pfad P), wobei jeder der übergeordneten Datenpfade zu einer solchen Splittereinrichtung zum Replizieren und einer solchen Codierungs- und Modulierungseinrichtung führt.

# FIG 1A

# FIG 1B

# FIG 1C

FIG 2

FIG 3 Stand der Technik

für andere MS    OFDM

$a^{(m)}(i)c^{(m)}(0)$    $S_{1,i}$    $\cos(2\pi f_c t)$

$\cos\left(2\pi f_c t + 2\pi \dfrac{t}{T_S}\right)$

$a^{(m)}(i)c^{(m)}(1)$    $S_{2,i}$

MC-Übertragung

andere MS    $\cos\left(2\pi f_c t + 2\pi \dfrac{K-1}{T_S} t\right)$

$a^{(m)}(i)c^{(m)}(K-1)$    $S_{K,i}$

$\underline{S_i}$

Spektrale Spreizung

$\dfrac{a^m(i)}{T_S}$    K Halter    $c^m(k)$    S/P    $\sum\limits_k$    $s(t)$

$f_1$    $f_4$    $f$

EP 1 437 842 A1

Europäisches
Patentamt

**EUROPÄISCHER RECHERCHENBERICHT**

Nummer der Anmeldung

EP 03 00 0427

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | SAYEED, KASSAM: "Orthogonal frequency division multiplexing with coding and transmitter antenna diversity" PROCEEDINGS OF THE SPIE, Bd. 2601, 23. - 25. Oktober 1995, Seiten 169-176, XP000856489 Bellingham, S * Zusammenfassung * --- | 1-12 | H04B7/06 H04L27/26 |
| X | WO 02 25857 A (ERICSSON) 28. März 2002 (2002-03-28) * Abbildung 3 * --- | 1-12 | |
| X | US 6 144 711 A (RALEIGH) 7. November 2000 (2000-11-07) * Spalte 2, Zeile 10 - Zeile 20 * --- | 1-12 | |
| X | EP 0 600 547 A (PHILIPS) 8. Juni 1994 (1994-06-08) * Abbildung 1 * --- | 1,5,11,12 | |
| X | EP 0 932 285 A (TOSHIBA) 28. Juli 1999 (1999-07-28) * Absatz [0012] * --- | 1,5,11,12 | RECHERCHIERTE SACHGEBIETE (Int.Cl.7) H04B H04L |
| X | EP 1 182 817 A (SONY) 27. Februar 2002 (2002-02-27) * Zusammenfassung * ----- | 1,5,11,12 | |

Der vorliegende Recherchenbericht wurde für alle Patentansprüche erstellt

| Recherchenort | Abschlußdatum der Recherche | Prüfer |
|---|---|---|
| DEN HAAG | 15. Mai 2003 | Scriven, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

EP 1 437 842 A1

## ANHANG ZUM EUROPÄISCHEN RECHERCHENBERICHT
## ÜBER DIE EUROPÄISCHE PATENTANMELDUNG NR.

EP 03 00 0427

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-05-2003

| Im Recherchenbericht angeführtes Patentdokument | | Datum der Veröffentlichung | Mitglied(er) der Patentfamilie | | Datum der Veröffentlichung |
|---|---|---|---|---|---|
| WO 0225857 | A | 28-03-2002 | AU | 8036201 A | 02-04-2002 |
| | | | WO | 0225857 A1 | 28-03-2002 |
| US 6144711 | A | 07-11-2000 | US | 2003072382 A1 | 17-04-2003 |
| | | | US | 6377631 B1 | 23-04-2002 |
| | | | US | 6452981 B1 | 17-09-2002 |
| | | | AU | 4238697 A | 19-03-1998 |
| | | | CA | 2302289 A1 | 05-03-1998 |
| | | | EP | 0920738 A1 | 09-06-1999 |
| | | | EP | 0931388 A2 | 28-07-1999 |
| | | | JP | 2001505723 T | 24-04-2001 |
| | | | WO | 9809385 A2 | 05-03-1998 |
| | | | WO | 9809381 A1 | 05-03-1998 |
| | | | WO | 9809395 A1 | 05-03-1998 |
| EP 0600547 | A | 08-06-1994 | EP | 0600547 A1 | 08-06-1994 |
| | | | DE | 69327837 D1 | 16-03-2000 |
| | | | DE | 69327837 T2 | 12-10-2000 |
| | | | FI | 935355 A | 02-06-1994 |
| | | | JP | 6232793 A | 19-08-1994 |
| | | | US | 5528581 A | 18-06-1996 |
| EP 0932285 | A | 28-07-1999 | JP | 11275044 A | 08-10-1999 |
| | | | EP | 0932285 A2 | 28-07-1999 |
| EP 1182817 | A | 27-02-2002 | EP | 1182817 A1 | 27-02-2002 |
| | | | JP | 2002135228 A | 10-05-2002 |
| | | | US | 2002097668 A1 | 25-07-2002 |

EPO FORM P0461

Für nähere Einzelheiten zu diesem Anhang : siehe Amtsblatt des Europäischen Patentamts, Nr.12/82

14